# EUROPEAN PATENT SPECIFICATION

(11) **EP 1 982 375 B1**
(45) Date of publication and mention of the grant of the patent: **28.09.2011**
(21) Application number: 07706087.9
(22) Date of filing: 04.02.2007
(51) Int. Cl.: H01M 8/02

(54) **PERFORATED FLOW DISTRIBUTOR PLATE**
PERFORIERTE STRÖMUNGSVERTEILERPLATTE
PLAQUE DISTRIBUTRICE DE FLUX

(30) Priority: 05.02.2006 IL 17353906
(43) Date of publication of application: 22.10.2008
(73) Proprietor: Metal-Tech Ltd., 84874 Beer-Sheva (IL)
(72) Inventor: ROSENBERG, Ariel, 60910 Bnai Zion (IL); NOACH, Rami, 84965 Omer (IL); GIVON, Menachem, 85320 (IL); MOZES, Shahar, 64255 Beer-Sheva (IL); BENAYAHU, Ran, 84965 Omer (IL)
(74) Representative: Vossius & Partner
(86) International application number: PCT/IL2007/000144
(87) International publication number: WO 2007/088551

(56) References cited:
- EP-A- 0 418 528
- EP-A- 0 490 808
- WO-A-2005/076395
- JP-A- 2 160 371
- JP-A- 3 011 557
- JP-A- 11 097 039

## Description

There exists a need, in many technological applications, to effectively transfer and distribute mixtures of liquids and gases within chemical and engineering devices. In general, the performance of heat exchangers and chemical reactors critically depends on the distribution of the fluids flowing therethrough.

An electrochemical reactor such as a fuel cell is a specific example where the distribution of the reactants therein and the removal of products therefrom require special attention. In its most basic configuration, a fuel cell comprises a pair of electrodes supported on the two opposing faces of a thin proton exchange membrane, wherein the resulting membrane electrode assembly is interposed between a pair of current collector plates. The fuel, which is generally pure hydrogen or diluted alcohol, and the oxidant, which may be either oxygen or air, are continuously supplied to the cell from outside, and are allowed to react at the anode and the cathode, respectively. The membrane electrode assembly generally comprises suitable catalytic surfaces, to accelerate the reduction and oxidation reactions. Electrons released on the anode become a power source while traveling via an external current conductor under the redox voltage of the electrodes towards the cathode, in order to react with excess protons and the oxidant to form water. The respective chemical reactions for direct methanol fuel cell are the following:

CH₃OH + H₂O → 6H⁺ + CO₂ + 6e⁻ (anode reaction)

3/2O₂ + 6H⁺ + 6e⁻ → 3H₂O (cathode reaction)

For many practical utilities it is necessary to stack together a plurality of individual cells in series. In the resulting arrangement, known in the art as a "fuel cell stack", oppositely charged electrodes of each pair of adjacent cells are separated by one or more electronically conductive plates. Throughout this application, the terms "bipolar plate", "bipolar unit" and "bipolar assembly" are interchangeably used to designate the aforementioned one or more electronically conductive plates disposed between adjacent cells in a fuel cell stack.

A bi-polar plate used in a fuel cell stack is ideally intended to serve several functions: 1) collecting and conducting the electrical current; 2) providing an effective flow field for the reactants and the products, namely, directing the reactants, which are delivered to the bi-polar plate from external sources through suitable passages provided within the fuel cell stack, and bringing the same into contact with the adjacent electrodes, while allowing an effective removal the reaction products therefrom at a preferred flow regime with minimal pressure drops; 3) mechanically supporting the entire fuel cell stack arrangement; 4) allowing efficient heat transfer; 5) contributing to the resiliency of the stack, mainly during an operation involving temperature changes; and 6) providing a low volume, light weight structure.

The art proposed various suitable designs for a bi-polar plate assembly, in an attempt to meet the aforementioned requirements. The following discussion relates to various combinations comprising a plurality of structurally modified metal sheets, which are placed between adjacent cells in a fuel cell stack.

US 4,855,193 discloses a fuel cell, wherein an electrically conductive screen is placed between a separator sheet and a wet-proofed carbon sheet contacting the electrode surface.

US 6, 007, 933 describes the use of a perforated metal sheet in combination with a separator plate having serpentine flow channels defined thereon.

US 2003/0203272 describes a system for uniformly distributing gaseous fuel over the anode surface of a fuel cell, according to which a first plate, which is perforated with holes, is disposed between the anode and a second plate provided with bumps thereon, wherein said second plate faces the cathode and is in electrical contact therewith due to said bumps. The plenum defined between said first and second plates is used to receive the fuel, which reaches the anode surface through the aforementioned holes.

US 6,872,482 describes a fuel cell stack which comprises a leaf spring in the form of a metal sheet, capable of undergoing elastic deformation when placed under a load and upon removal of said load. The leaf spring is interposed between a pair of metal plates defining the separator according to the cell disclosed in said publication.

It is an object of the present invention to provide an improved flow distributor, which may be suitably used, *inter alia*, as a component of a mono and/or bi-polar unit in an electrochemical cell or fuel cell stack or in heat exchangers, particularly in a direct methanol fuel cell stack and heat exchangers which require improved and controlled flow fields, as well as improved resiliency and electrical conductance.

It is another object of the present invention to provide a flow distributor, and a bi-polar unit based thereon, which are easy and inexpensive to produce and effectively fulfill the combination of functional and structural requirements mentioned above.

It is yet another object of the present invention to provide a fuel cell, or a fuel cell stack, comprising the novel flow distributor and a bi-polar unit based thereon, respectively.

These objects are achieved with the features of the claims.

The face of the flow distributor plate that is provided with the elastically displaceable baffles thereon is designated "the rough face", whereas the opposing face thereof is referred to as "the non-rough face". It should be noted that the baffles may be either randomly or orderly distributed on the rough face of the flow distributor plate, according to a pre-determined pattern.

Most preferably, the aforementioned elastically displaceable baffles are in the form of metallic tabs, wherein each of said metallic tabs is associated with one of the apertures in the perforated region of the flow distributor plate, said tab and said aperture associated therewith having a common boundary. This preferred embodiment of the flow distributor plate of the present invention is conveniently formed by bending out of the plane of a metal plate a plurality of individual sectors, to obtain a plurality of apertures, wherein said sectors are caused to extend from one face of said plate to provide a plurality of baffles in the form of metallic tabs distributed on said face.

The preferred shape, structure and purpose of the aforementioned apertures and baffles, which constitute an important structural feature according to the present invention, are described in more detail hereinbelow.

It should be noted that when placed within a fuel cell, the flow distributor plate of the invention fulfills additional functions, namely, the collection and the conductance of the electrical current. Accordingly, the term "current collector flow distributor plate" is hereinafter used to indicate the specific embodiment of the invention intended for use in electrochemical cells. When intended for use in electrochemical cells and especially, in a fuel cell stack, the perforated region of the current collector flow distributor plate is advantageously surrounded by a peripheral region defined by a sealable surface having openings incorporated therein. Briefly, the current collector flow distributor plates of the present invention are positioned within a fuel cell, such that the non-rough face of each of said plates is parallel to, and in intimate contact with, a gas diffusion layer provided on the membrane electrode assembly of said cell, whereas the opposing, rough face of said current collector flow distributor plate is affixed to, or has an intimate contact with, a metallic separator sheet to form a space therebetween. In operation, the externally supplied reactants fed into the fuel cell are delivered to the spaces defined between the metallic separator sheet and the rough faces of the current collector flow distributor plates affixed thereto. The flow of the fluids (namely, the fuel or the oxidant, and/or the products, e.g., water or carbon dioxide, as well as non-reacted materials such as nitrogen and water, either in a gaseous or a liquid phase) within said spaces is directed by the baffles provided therein, which distribute said flow such that the fuel and the oxidant are effectively brought into contact with the adjacent anode and cathode, respectively, either through a direct contact or, most preferably, through a diffusion layer interposed therebetween, and products are removed therefrom. It may be appreciated that the baffles extended from the surface of the current collector flow distributor plate are at least partially pressed against the metallic separator sheet affixed thereto, such that, in view of their electron conductivity and resiliency properties, the baffles contribute to the current collection, fluid flow management and the compressibility of the fuel cell stack.

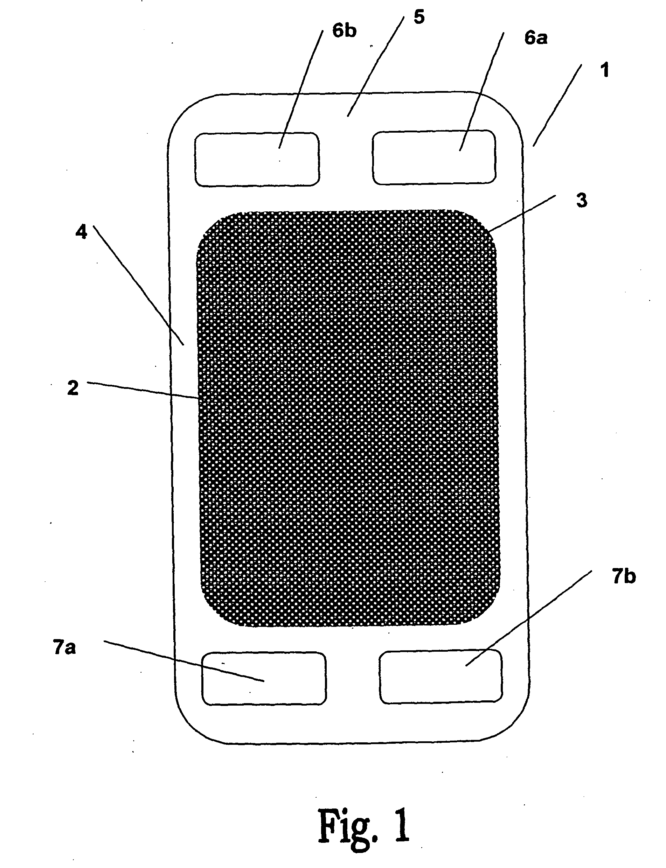

Figure 1 is a top view of a flow distributor plate **1**, showing the non-rough face thereof and illustrating its main structural features. Hereinafter, the flow distributor plate will be designated by the term "current collector flow distributor plate", in order to render the function fulfilled thereby within electrochemical cells more readily understood and appreciated. It should be noted, however, that the following description may be readily adopted for preparing a flow distributor plate according to the more general case, namely, for use in various applications other than electrochemical cells.

The current collector flow distributor plate **1** is provided in the form of a square or rectangular metal sheet, having a thickness in the range between 0.05 and 5mm. The central region **2** of the rectangular metal sheet is perforated by a plurality of apertures 3, and is concentrically positioned within said sheet. Typically, the area of the central region **2** constitutes about 50 to 90 percent, and more preferably about 75 to 85 percent, of the total area of the current collector flow distributor plate **1**.

The current collector flow distributor plate **1** provided by the present invention may be suitably used in electrochemical cells and more preferably in a fuel cell, and the central, perforated region **2** of said current collector flow distributor plate **1** is accordingly designed such that it corresponds in geometrical form and size to the active area of the membrane electrode assembly placed within said fuel cell. Typically, the area of the central, perforated region **2** of the current collector flow distributor plate **1** may range from several squared centimeters to about few thousands of squared centimeters, depending on the current that is to be generated by the cell. In practice, the central region of particularly large current collector flow distributor plate may be subdivided, to form a plurality of separated zones each of which being perforated by apertures and having baffles distributed on one of its faces, said separated zones preferably having dimensions in the range of 5x5 and 50x50 cm.

According to Figure 1, the central region **2** of the current collector flow distributor plate **1** and the peripheral region **4** surrounding the same constitute a unitary structure made of a thin metal sheet, wherein the metal is most preferably selected from the group consisting of iron, copper, aluminum, stainless steel, titanium, niobium, nickel, cobalt, chromium, zirconium, tungsten, molybdenum, magnesium, manganese, tantalum and alloys and mixtures thereof. Alternatively, plate **1** may be made of conductive or non conductive polymers, ceramics, carbon, graphite, or composites thereof. If desired, plate **1** may be coated in order to improve corrosion resistance, improve surface behavior (i.e. surface conductivity) and fluid fobicity (i.e hydrophobicity). Suitable coating materials include noble metals (e.g., gold, platinum), metal oxides, conductive ceramic, conductive polymers, carbon and graphite or composites thereof, or any metal or combination of metals as mentioned hereinabove.

The central region of the current collector flow distributor plate according to the present invention is perforated by a plurality of, apertures, such that the combined area of the apertures constitutes about 15% to 70%, and more preferably about 25% to 50%, of the area of said central region. It should be understood that the term "aperture", as used herein, encompasses a slot or a hole defined by any closed, arbitrary curve or polygon. The geometrical form of the apertures is preferably selected from the group consisting of circles, triangles, squares, rectangles, parallelograms, trapezoids or other n-polygons, wherein n is an integer between 5 to 12, ellipses and stars, sections of the aforementioned shapes and combinations thereof.

In one preferred embodiment, one or more apertures have a geometrical form which is centrically symmetric. According to a particularly preferred embodiment, the geometrical shape of one or more apertures is defined by a segment, hereinafter sometimes referred to as the base, the end points of which are connected by a polygonal line or a curved line, e.g. an arc. Preferably, the aforementioned shape is the figure obtained by bisecting a centrically symmetric figure, such as a circle, an ellipse and a polygon. The advantages associated with this particular type of apertures will become apparent as the description proceeds. Briefly, individual sectors within the central region of the current collector flow distributor plate that are bound by a segment, the end points of which are connected by a polygonal line or a curved line, may be bent along said segment out of the plane of said plate, resulting in the formation of apertures, while concurrently providing elastically displaceable baffles in the form of metallic tabs on one surface of the current collector flow distributor plate. For example, the aforementioned apertures may be in the form of isosceles trapezoids, positioned within the central region of the current collector flow distributor plate in pairs, such that the bases of the trapezoids belonging to the same pair are parallel to, and spaced apart from, each other.

The dimension of the aperture is preferably within the range of 0.2 mm to 12 mm average diameter while slots-like apertures may have a length longer than 12mm. The size of the apertures is most preferably optimized in order to improve the electronic conductivity in plane and through the plane as well as fluid transfer between the central region of the current collector flow distributor metal plate and the membrane electrode assembly, which is intended to be in contact therewith within the fuel cell, without reducing the mechanical strength of the plate, as will be explained in more detail below.

The apertures may be randomly positioned within the central region of the current collector flow distributor plate, or may be orderly arranged therein in a predetermined form, such as an array defined by rows of said apertures. It is preferred, however, that the apertures are distributed in a well- considered layout within the central region of the current collector flow distributor plate, in order to control the distribution of the flow of the fluids and the collection of the current, as will be discussed in more detail below.

The peripheral region **4** of the rectangular plate, which surrounds the perforated, central region, is provided by a surface **5** that is used for sealing and supporting the current collector flow distributor plate within the fuel cell stack, as will be discussed in more detail hereinbelow. In the embodiment shown in the figure, the peripheral region **4** comprises two pairs of openings, designated (**6a, 7a**) and (**6b, 7b**), respectively, wherein openings of the same pair are located in opposing sides of said peripheral region, such that they are separated by the central region **2.** According to the embodiment shown in the figure, all the four openings disposed within the peripheral region of the current collector flow distributor plate have rectangular shape, with openings belonging to the same pair having the same dimensions. However, these structural characteristic are not mandatory, and the openings (**6a, 7a**) and (**6b, 7b**) may have different geometrical shapes and sizes. As will become apparent as the description proceeds, passages longitudinally extending within the fuel cell stack for delivering the externally supplied reactants onto the electrode active area, and for removing the products therefrom, are formed upon affixing together suitable members of said fuel cell stack, which members comprise in their margins corresponding openings, by the apposition of such openings. Preferably, the combined area of the openings (**6a, 7a**) and (**6b, 7b**) constitutes about 2% to 20% of the total area of the current collector flow distributor plate **1.**

As set forth above, a particularly preferred current collector flow distributor of the present invention is formed by bending out of the plane of the central region thereof a plurality of individual sectors, to obtain a plurality of apertures corresponding in geometrical form and size to said sectors, which sectors are caused to extend from one face of said plate to provide a plurality of baffles in the form of metallic tabs distributed on said face. One possible preparation procedure will now be illustrated in respect to Figures 2a to 2b. The unique structural features of the resulting current collector flow distributor plate and the elastically displaceable baffles distributed thereon are illustrated in Figures 3a, 3b, 4a and 4b.

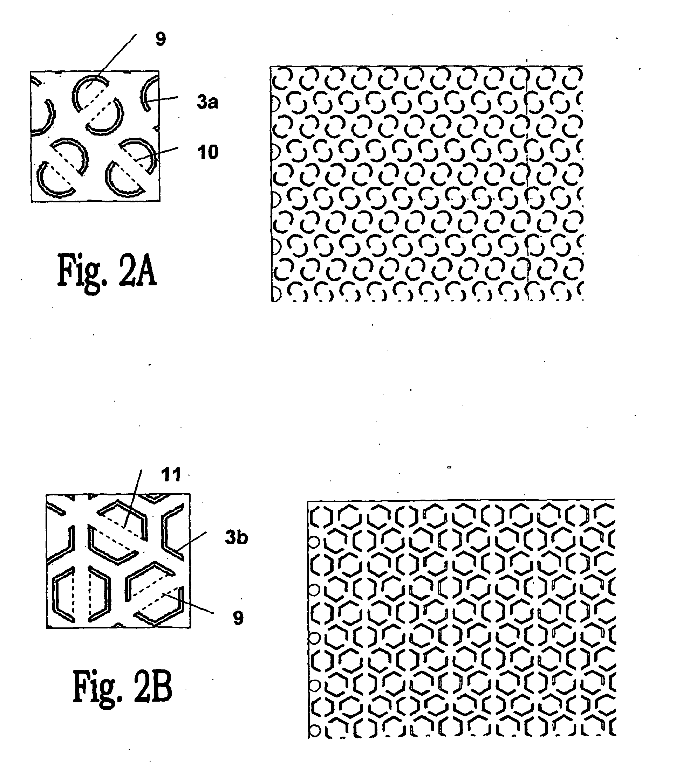

Figures 2a and 2b show two preferred patterns that may be suitably used in the preparation of the perforated central region of the current collector flow distributor plate according to the present invention. The preparation involves the processing of the central region of a metal plate, for example, a thin stainless steel sheet (SS302-FH) having a thickness of about 0.05 to 0.50 mm, by techniques well known in the art, including, for example, laser cutting or wet-etching, to produce full-depth incisions in the form of a curved line **3a** or a polygonal line **3b,** having a width in the range of 0.05 and 2 mm, such that said curved or polygonal line define, together with the imaginary segment connecting the end points of said line, a sector that may be easily bent out of the plane of the metal plate along said segment. The sector may have any desired geometrical shape, which depends, of course, on the particular curved or polygonal lines **3a** and **3b.** According to one embodiment, the sector has a geometrical shape possessing an axial symmetry, obtained by bisecting a centrically symmetric figure. Thus, as shown in Figure 2a, when the full-depth incision made in the metal plate has the form of a curved line **3a,** said curved line being an arc corresponding to a section of the circumference of a circle, the resulting sector **9** defined between said arc and the imaginary diameter **10** connecting the end points of said arc has the shape of a semi-circle. In Figure 2b, the sector **9** bounded between the polygonal line 3b and the imaginary segment **11** connecting the end points of said line is an isosceles trapezoid. It may be seen that sectors **9** are preferably defined within the central region of the current collector flow distributor plate in pairs, such that the bases **11** of the trapezoidal sectors **9** belonging to the same pair are parallel to, and spaced apart from, each other.

Having produced the desired pattern of incisions on the central region of the metal plate, the plate is placed on a suitable working surface, shaped to incorporate the bent baffles in such a way that the bending lays on a solid material line and the plurality of sectors **9** are all caused to bent out of the plane of the metal plate in one direction, that is, either upward or downward with respect to said plane, following which the central region of said metal plate becomes perforated with a plurality of apertures, while a plurality of elastically displaceable metallic leaves, or tabs, each of which corresponding in geometrical shape and size to said sector **9**, extend from one face of said metal plate. Thus, according to a particularly preferred embodiment of the invention, the baffles distributed on one face of the current collector flow distributor metallic plate and extending therefrom are provided in the form of elastically displaceable metallic tabs, which have been bent out of said plate.

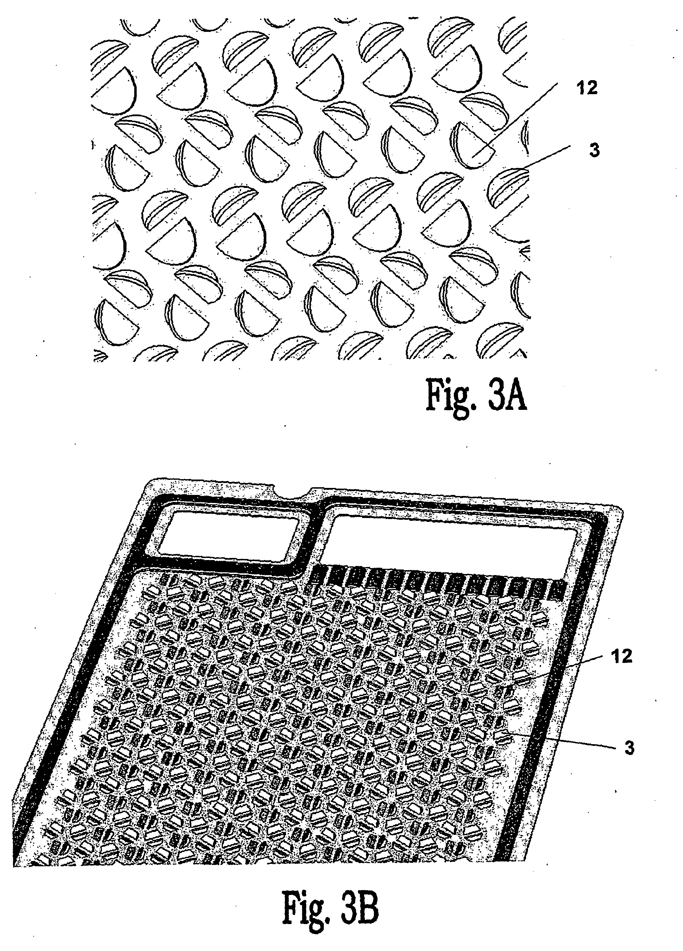

Figures 3a and 3b provide top view of the rough face of the current collector flow distributor plate obtained following the procedure described hereinabove in relation to Figures 2a to 2b, respectively. The rough face is provided with a plurality of baffles in the form of elastically displaceable metallic tabs **12** distributed thereon and extending therefrom, wherein each of said metallic tabs is associated with one of the apertures **3** in the central, perforated region, and wherein said tab **12** and said associated aperture **3** have a common boundary, whereby the dihedral angle α defined between the planes containing the aperture **3** and the tab **12** is typically in the range between 5 to 175 degrees, and more preferably in the range 10 to 60 or 120 to 170 degrees. According to the embodiments illustrated in Figures 3a and 3b the baffle and the aperture associated therewith correspond in respect to geometrical form and size, though such a correspondence is clearly not mandatory.

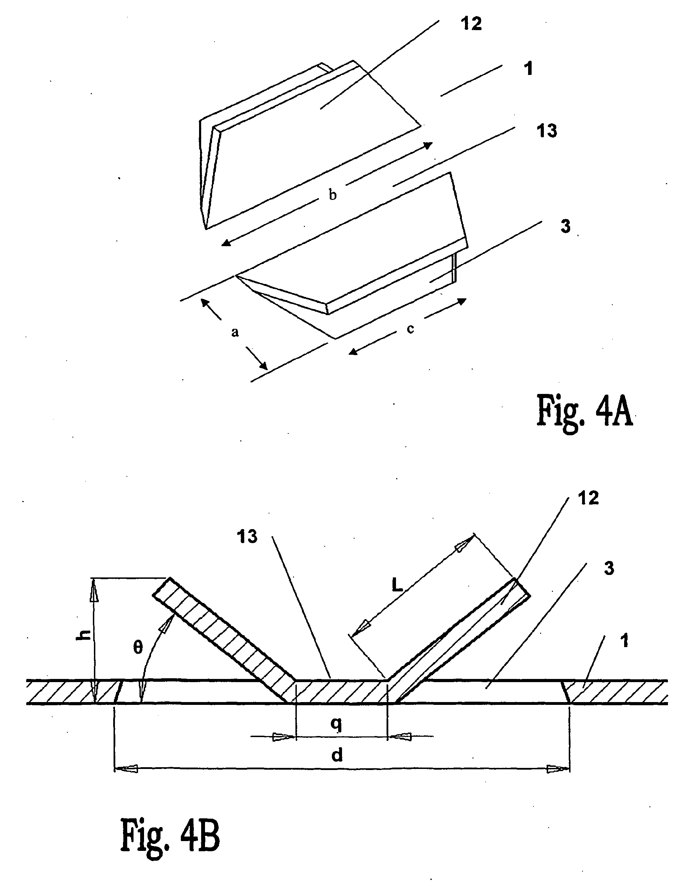

Figures 4a and 4b provide a perspective view and a side section view, respectively, showing the elastically displaceable metallic tabs **12** extending from the plane of the metal plate **1**. In the specific embodiment shown in these figures, the metallic tabs **12** are formed by bending out of the surface of the metal plate **1** individual sectors thereof having a geometrical shape of isosceles trapezoid, in accordance with the procedure illustrated in figure 2b. As mentioned above in relation to Figure 2b, said sectors are preferably arranged in pairs within the central region of the current collector flow distributor plate. Consequently, after said sectors have been bent out of the plane of the plate, the resulting metallic tabs **12** corresponding to said sectors will be also distributed on the surface the central region of the current collector flow distributor plate in pairs, such that the long bases of the trapezoidal tabs belonging to the same pair are parallel to, and spaced apart from, each other, and a narrow passage **13** (dimensioned as **q** in fig. 4b) is defined between the two trapezoidal tabs of each pair.

The altitude (**a**), the long base (**b**) and the short base (c) of the trapezoid are each preferably within the range of 0.2 to 12 mm. The distance (**d**) between the bases of the trapezoidal tabs belonging to the same pair is typically about 1 to 25 mm. The dihedral angle θ defined between the plane of the metal plate **1** and the tab **12** is typically in the range between 5 to 175 degrees, and more preferably in the range 20 to 60 or 120 to 170 degrees, as mentioned hereinabove. Preferably, the height (**h**) of the tab **12,** which is defined by the distance between the uppermost point of the free end of said tab **12** (the end which is not connected to the metal plate **1**) and the surface of the metal plate **1** is in the range of 0.15 to 5 mm.

The plurality of elastically displaceable metallic tabs **12** that extend from one face of the current collector flow distributor plate **1,** which metallic tabs have been bent out of said plate, as described herein above in relation to Figures 2a-2b, 3a-3b, 4a and 4b, constitute an important feature of the present invention. The distribution of said metallic tabs on the surface of the current collector flow distributor plate, in combination with their structural and physical characteristics, and specifically, their geometrical form, spatial orientation, mechanical strength and resiliency properties are designed to assure an efficient flow of the reactants towards the electrodes and between the inlet and outlet of the fluids, improved compressibility of the entire fuel cell stack and optimal electrical conductivity between the cells.

The elastically displaceable tabs **12** serve to compensate for any manufacturing tolerance, as well as assembling and operating conditions causing changes in the original dimensions of the fuel cell in which the plate is positioned. Furthermore, the tabs **12** are back-holding the required pressure imposed by the current collector flow distributor plate onto the gas diffusion layer and through that onto the catalyzed active area and the membrane in the case of a chemical reactor or a fuel cell, and between other plates or fluid conductors in the case of heat exchangers or coalescers. The spring constant [k] of the elastically displaceable tab **12**, defined as the deformation imposed by a specific applied force and expressed by [k] = deflection [microns] / force [kg] is affected by the material of which the tab is made and its optional post treatment (i.e. hardening), as well as the shape and dimensions of the tab, and the means by which it was formed. The elastically displaceable tab **12** is designed to allow a required deflection under a specified force. Thus, the elastically displaceable tab 12 has a free end which is not connected to the current collector flow distributor plate, for allowing the desired deflection. The deflection of the tab **12** is measured by the reduction of the height (**h**) of the tab, where higher flexibility is associated with larger deflection under the application of the same force. Preferably, in the case of presently used fuel cells, a pressure in the range of 2 to 50 kg/cm² and more specifically 5-25 kg/cm² will result in a deflection in the range of 0.005 to 1 mm and more specifically 0.02 to 0.2 mm; in the case of heat exchangers and coalescers the deflection will be closer to the low limits of the aforementioned ranges.

The distribution of the metallic tabs **12** within the central region of the flow distributor current collector plate, and their inclination relative to said plate, depend, inter alia, on the relative position of the tabs in respect to the expected flow patterns of the reactants and products. Thus, for examples, the density of tabs in the vicinity of the anode inlet, where a single phase flow exists, may be greater than the density of the tabs in the vicinity of the anode outlet, where a bi-phase fluid flow exists and the gas bubbles require a less dense flow plenum. Thus, according to one embodiment, the distribution, and optionally also the size and shape of the baffles on the rough face of the current collector flow distributor are position dependent.

If desired, some holes may be applied onto the metallic tab, in order to affect the tabs strength and their resiliency, while also contributing another degree of freedom in the design and control of the fluid flow towards the electrodes.

It should be understood that the preparation method described hereinabove, involving the formation of a plurality of full-depth incisions within the central region of the metal plate and the subsequent bending of the plurality of sectors, each of which being defined by an incision and the segment connecting the end points of said incision, is provided for the purpose of illustration only. The perforation of the central region of the metal plate **1,** for providing the plurality of metallic tabs **12** on one face of said metal plate **1** may be effectively accomplished using one or more of the following metal processing techniques well known to those skilled in the art: cutting, drilling, punch-cutting, punching, etching, laser cutting, forming, roll forming, embossing, shaping, magnetic shaping, rubber body shaping, fluid pressure shaping, embedding, die pressing and forging.

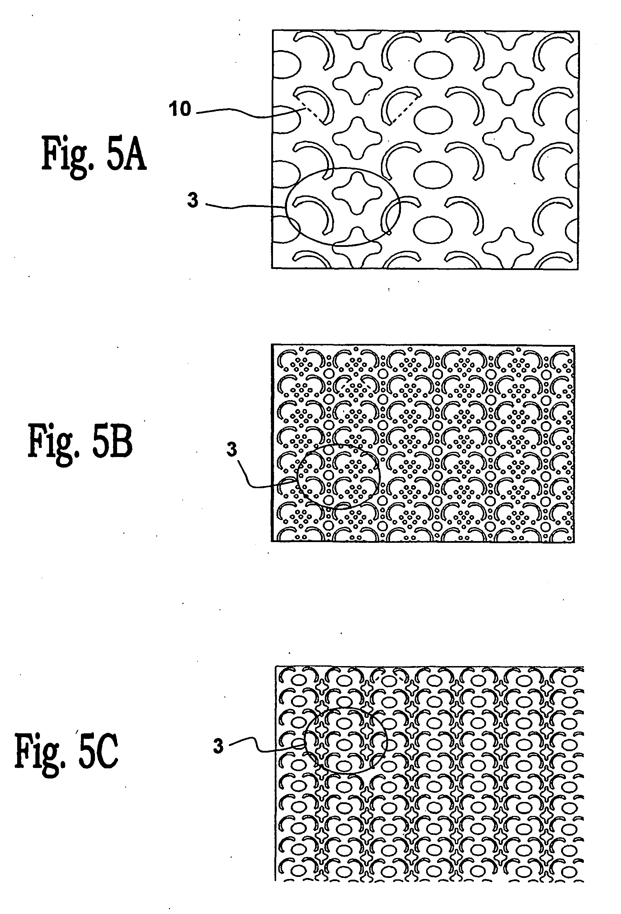

Additional various pattern examples that may be suitably used for perforating the central region of the current collector flow distributor plate according to the present invention are given for the purpose of illustration in Figures 5a to 5c. It may be seen that these patterns are used to form apertures having centrically symmetric geometrical shapes, such as circles of different diameters, ellipses and stars, in combination with apertures having only axial symmetry, such as semi-circles and isosceles trapezoids (not shown). The later may be produced using the procedure described hereinabove, namely, the formation of full-depth incisions in the form of arcs and the subsequent bending out of the plane of the current collector flow distributor plate the sectors defined by said arcs and the segment connecting their end point. It may be appreciated that the use of the patterns illustrated in Figures 5a and 5C may provide a current collector flow distributor plate having a rough face wherein the number of metallic tabs distributed thereon and extending therefrom is smaller than the number of apertures in the perforated central region thereof. It should also be noted that the metallic tabs may be either smooth or roughened, having some out-of plane extensions, which may contribute to the tabs rigidity or flexibility, affect fluid flow and increase the incision to tab-area ratio.

As explained hereinabove, the current collector flow distributor plate of the present invention may be suitably positioned within a fuel cell, such that the non-rough face of said plate is parallel to, and is in intimate contact with, a gas diffusion layer provided on the membrane electrode assembly of said cell, whereas the opposing, rough surface of said current collector flow distributor plate faces an electronically conductive separator sheet to form a space therebetween, wherein said space contains the baffles deposited on said rough surface of said current collector, which space is intended for receiving the externally supplied reactants and distributing the same, by means of said baffles, to allow an effective contact with the surface area of the adjacent electrode. As will become apparent as the description proceeds, in order to increase the distance between the current collector flow distributor plate and the metallic separator sheet affixed thereto, suitable spacer elements are disposed therebetween, to provide an effective flow space for the reactants. The spacers form an integral part of the current collector flow distributor plate. It may be also appreciated that when assembled to form a bi-polar unit, the flow distributor current collector plates and the separator interposed therebetween are suitably arranged to allow the introduction of the fuel and the oxidant to the anodic and cathodic spaces, respectively, and the removal of reaction products therefrom, through the openings that are peripherally incorporated in said plates.

Thus, according to an embodiment, a bi-polar assembly not being part of the present invention is shown which comprises a first current collector flow distributor plate and a second current collector flow distributor plate, wherein each of said plates has an electronically conductive region perforated by a plurality of apertures, wherein one face of said region is provided with elastically displaceable, electronically conductive baffles distributed thereon and extending therefrom, and wherein said perforated region is surrounded by a peripheral region defined by a sealable surface having at least one pair of openings incorporated therein, wherein openings of the same pair are located in opposing sides of said peripheral region, such that they are separated by said perforated region, wherein said plates are placed in parallel to and spaced apart from each other, with their faces having the baffles distributed thereon facing one another; and

An electronically conductive separator interposed between said pair of current collector flow distributor plates, the geometric form and size of said separator being identical to the form and size of said current collector flow distributor plates, said separator having in its margins at least one pair of openings which are substantially aligned with the openings located in the peripheral region of said current collector flow distributor plates, with respect to position, geometric form and size; wherein said current collector flow distributor plates and the separator interposed therebetween are being affixed together and are preferably circumferentially sealed to define two internal separated spaces, wherein the first space is bound by the rough face of the first current collector flow distributor plate and the separator, and the second space is bound by the rough face of said second current collector flow distributor plate and the separator, and wherein the openings located in the peripheral regions of said pair of current collector flow distributor plates and the openings in the margins of said separator are contiguously arranged to form at least one pair of continuous passageways that extend perpendicularly throughout said bi-polar assembly, such that passageways of the same pair are located in opposing sides of said bi-polar assembly, wherein each pair of perpendicularly extending passageways is capable of being in fluid communication with either said first space or with said second space.

The following figures illustrate various modes of assembling together the current collector flow distributor plates, the separator sheet and various spacer elements. It should be noted that the two current collector flow distributor plates may not be necessarily identical, and they may differ from one another by, for example, the size, geometrical shape and distribution of the baffles distributed thereon.

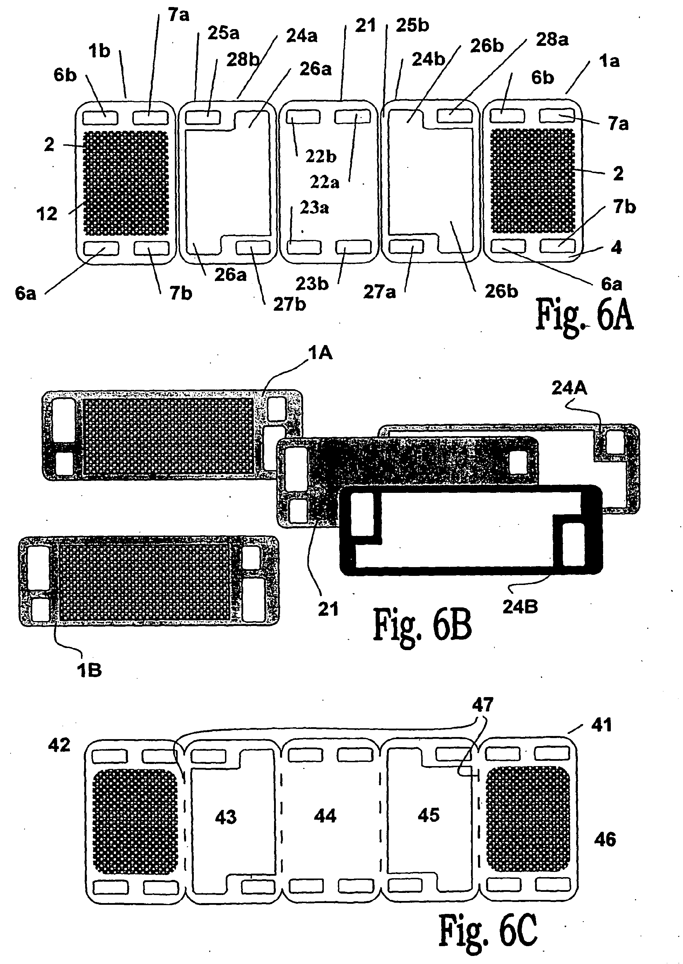

In the embodiment shown in Figure 6a, the bi-polar plate comprises a pair of rectangular current collector flow distributor plates as described hereinabove. Thus, each of the first current collector flow distributor metallic plate **1A** and the second current collector flow distributor metallic plate **1B** has a central region **2** perforated by a plurality of apertures, wherein one face of said central region is provided with baffles **12** distributed thereon and extending therefrom (the rough surface of **1A** and the non-rough surface of **1B** are not shown in this figure). The central region of each current collector flow distributor plate is surrounded by a peripheral region defined by a sealable surface **4** having a first pair of rectangular openings **6a, 7a** and a second pair of rectangular openings **6b, 7b** incorporated therein, wherein openings of the same pair are located in opposing sides of said peripheral region, such that they are separated by said central region. The openings **6a** and **7a** serve as the inlet and outlet of reactants for the anode, respectively, where the openings **6b, 7b** serve a similar function for the cathode. The bi-polar assembly further comprises a separator **21,** which is most preferably a metal sheet made of, for example, stainless steel (SS316) with a thickness of about 0.05 to 3 mm. Alternatively, the separator may be made of conductive or non conductive materials (selected, for example, from the group consisting of kynar®, Teflon®, polypropylene, maylay®, polyethylene) where, in the latter case, means for improving electronic conductivity may be added thereto. The geometric form and size of said separator are essentially identical to the form and size of the current collector flow distributor metallic plates **1A, 1B.** The separator **21** comprises, in its margins, a first pair of openings (designated **22a, 23a**) and a second pair of openings (**22b, 23b**), which openings are identical to the openings (**6a, 7a**) and (**6b, 7b**), respectively, located in the peripheral region of the current collector flow distributor metallic plates, with respect to position, geometric form and size.

In addition to the pair of current collector flow distributor metallic plates **1A, 1B** and the separator sheet **21,** the bi-polar plate assembly further comprises a pair of metallic spacers **24A** and **24B,** each of which having a geometric form and size that are essentially identical to the form and size of the current collector flow distributor metallic plates **1A, 1B** and the separator **21.** Thus, according to the embodiment illustrated in Figure 6a, the conductive spacers **24A** and **24B** are provided in an essentially rectangular shape. Typically, a metal of thickness in the range of 0.05 and 5 mm is used to make the spacer, such as, for example, SS316.

Each of the spacers **24A, 24B** is in the form of a planar frame **25A, 25B,** such that continuous open areas **26A, 26B** are bound by said frames, respectively.

In the spacer **24A,** the open area **26A** is identical, in geometrical form, position and size, to the area obtained by combining together the central region **2** of the current collector flow distributor metal plate **1A,** the first pair of openings **6a, 7a** located on the peripheral region of said metal plate, and the sections separating said central region and said openings. The frame **25A** of the spacer **24A** is perforated by a pair of holes **27b, 28b** which coincide with the second pair of openings **6b, 7b** located in the peripheral region of said first metallic plate **1A,** with respect to position, geometric form and size.

In the second spacer **24B,** the open area **26B** is identical, in geometrical form, position and size, to the area obtained by combining together the central region **2** of the current collector flow distributor metal plate **1B,** the second pair of openings **6b, 7b** located on the peripheral region of said metal plate, and the sections disposed between the central region and said openings. The frame **25B** of the spacer **24B** is perforated by a pair of holes **27a, 28a** which coincide with the first pair of openings **6a, 7a** located in the peripheral region of said first metallic plate **1B,** with respect to position, geometric form and size.

Figure 6b shows how the aforementioned metal plates and sheets **1A, 24A, 21, 24B, 1B** are assembled together to afford a bi-polar unit. The current collector flow distributor metal plate **1A,** the spacer **24A,** the separator **21,** the spacer **24B** and the current collector flow distributor metal plate **1B** are successively arranged in parallel, such that said members, all having rectangular shape of the same size, are caused to overlap each other, with the surfaces of the current collector flow distributor metal plates **1A,1B** having the baffles distributed thereon facing said spacers **24A, 24B,** respectively, wherein the separator **21** is interposed between said spacers. As a result, two internal separated spaces are formed within the bi-polar unit, wherein the first space is bound by the rough face of the first current collector flow distributor metal plate **1A** and the separator **21,** and the second space is bound by the rough face of the second current collector flow distributor metal plate **1B** and said separator **21.** It may be appreciated that two pairs of passages perpendicularly extending within the bi-polar unit are also formed upon affixing together the aforementioned members in the manner described hereinabove, by the apposition of the openings (**6a, 6b, 7a, 7b**) located in the peripheral regions of said metallic plates **1A, 1B,** the openings **22a, 22b, 23a, 23b** located in the margins of said separator **21** and the holes **27a, 27b** and **28a, 28b** located in the spacers **24A** and **24B.** Passages of the same pair are located in opposing sides of the bi-polar assembly, wherein one pair of passages is connected to the first space and the other pair of passages is connected to the second space.

The bi-polar assembly is circumferentially sealed where needed to prevent fluid leakage during the operation of the fuel cell stack. Various sealing techniques may be used, including, for example, fit-pressing, folding and overlapping, riveting, welding (Electrode, TIG / MIG, laser, friction, compression, vacuum, magnetic, etc.), soldering, brazing, fusion, use of flat or shaped cross-section gaskets (i.e.: o-rings), adhesives, glues, dry or non-dry sealants, whether pre-made or applied in-situ or ex-situ. The sealing procedure is aimed to prevent internal and external leakage, while preferably improving the electrical contact between the bipolar sides (anode and cathode current collectors). For example, in the embodiment shown in Fig. 6b, the areas to be sealed are the two faces of the spacer elements **24A** and **24B.** The effective seal area depends naturally on the technology used for the sealing. Laser welding, for example, requires only very limited width to be effective (i.e.: less than 1 mm), while liquid seal may be applied on the entire surface of the spacers.

It may be appreciated that the production of the bi-polar unit illustrated in Figures 6a and 6b not being part of the present invention involves the processing of five separate metal sheets (two current collector flow distributor plates, one metallic separator and two spacers), and their subsequent assembling. This offers the advantage of using, for the preparation of the spacers, metal sheets of any desired thickness. However, in the event that it is intended to use current collector flow distributor plates, a separator and two spacers, all of the same thickness, then the preparation procedure illustrated in Figure 6c may be found particularly useful. Figure 6c is a top view of a rectangular metal sheet **41** which is subdivided into five rectangular sectors of the same dimensions, which are designated **42, 43, 44, 45** and **46.** The rectangular metal sheet **41** is typically made of stainless steel, the thickness of which being in the range of 0.05 and 5.0 mm. The metal sheet **41** is processed, by techniques mentioned hereinbefore, to define the desired patterns on each of the sections **42-46.** Thus, sections **42** and **46** are processed to afford the current collector flow distributor plates of the invention, section **43** and **45** are processed to give spacer sheets corresponding to members **24A, 24B** of Figure 6a, while the intermediate section **44** is processed to provide a separator sheet corresponding to numeral **21** of Figure 6a.

The rectangular metal sheet **41** is further processed in the boundary lines **47** separating between the aforementioned sections, for example, by forming columns of small holes in said boundary lines, such that said sections may be easily folded along said lines, to form the bi-polar plate unit described in Figure 6b.

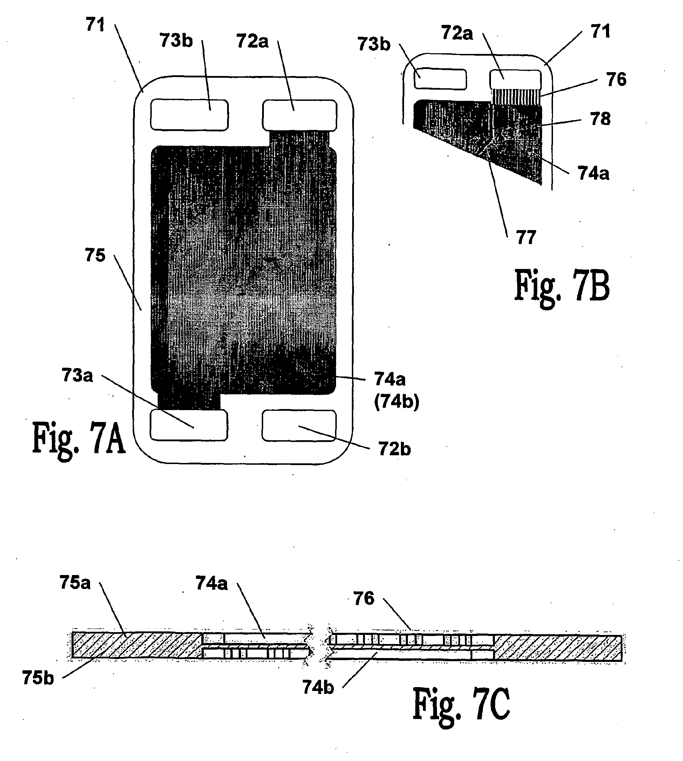

Figure 7a provides a top view of a metallic separator comprising the spacer elements as an integral part thereof. The separator **71** is in the form of a rectangular metal plate having a thickness in the range of 0.2 to 5.0 mm. The peripheral range of the plate is perforated with two pairs of openings (**72a, 73a** and **72b, 73b**) such that openings belonging to the same pair are positioned on opposing sides of the plate. The plate is provided, on each of its two opposing faces, with recessed central regions **74a and 74b,** respectively, surrounded by a region **75** of said plate which is elevated in respect to said recessed regions, wherein the first recessed central region **74a,** defined on the first face of the separator plate, is surrounded by an elevated region **75a** and is continuous with the first pair of openings (**72a, 73a**), while being separated from the second pair of openings (**72b, 73b**) by means of a portion of said elevated region **75a,** whereas the second recessed central region **74b,** defined on the second face of the separator plate (and therefore not shown in Figure 7a), is surrounded by an elevated region **75b** and is continuous with the second pair of openings (**72b, 73b**) and is separated from the first pair of openings (**72a, 73a**) by means of a portion of said elevated region **75b.** The thickness of the metal surface constituting the central recessed region is about 5 to 40 percent of the total thickness, as may be seen in Figure 7c, which provides a sectional view of separator **71.**

As set forth above, in operation, the separator **71** will be interposed between two current collector flow distributor plates according to the invention, such that the peripherally-placed openings will serve for delivering the externally supplied reactants into the spaces confined between said separator and the current collectors flow distributor plates attached thereto, and removing the products therefrom. Accordingly, in a particularly preferred embodiment of the invention shown in Figure 7b, the boundary areas of the recessed central region **74a,** which are adjacent to the pair of inlet and outlet openings (**72a, 73a**), are provided with a plurality of flow directing and/or diverting elements **76** thereon, wherein said elements, preferably in the form of separated narrow dikes defining channels therebetween (arranged in parallel in the specific embodiment shown in Figure 7b), are capable of directing a fluid entering through the inlet opening **72a** to flow onto the face of the recessed central region **74a.** Optionally, in order to increase the uniformity of flow distribution of the reactants, assuring that sufficient quantities thereof will reach the entire active area at the electrodes, one or more of the aforementioned narrow dikes **76** may extend, as illustrated by numeral **77,** from the boundary areas towards various zones of the recessed central region **74a.** Other possible protrusions may be provided on the two faces of the recessed central region in the form of raised bosses or dimples **78,** as can be seen in fig. 7b, which may be suitably design for improving the mechanical or electrical properties of the separator plate.

As explained hereinabove, the aforementioned structural modifications introduced into the recessed region of the separator plate (namely, the narrow dikes and the raised bosses or dimples) are intended improve the flowability of the reactants within the spaces defined between the separator and the two current collector flow distributors plates affixed to the opposing faces thereof and, in addition, to function as local supportive and/or conductive members, for example, for supporting a gasket sheet placed in the opposing side of the electrochemical cell.

Separator plate **71** may be conveniently prepared by processing a metal sheet having a thickness in the range indicated above using etching techniques, and specifically, photo etching procedures, in order to remove the unwanted portions therefrom according to a predetermined design complying with the structural requirement described hereinabove, as illustrated in more detail in the examples below.

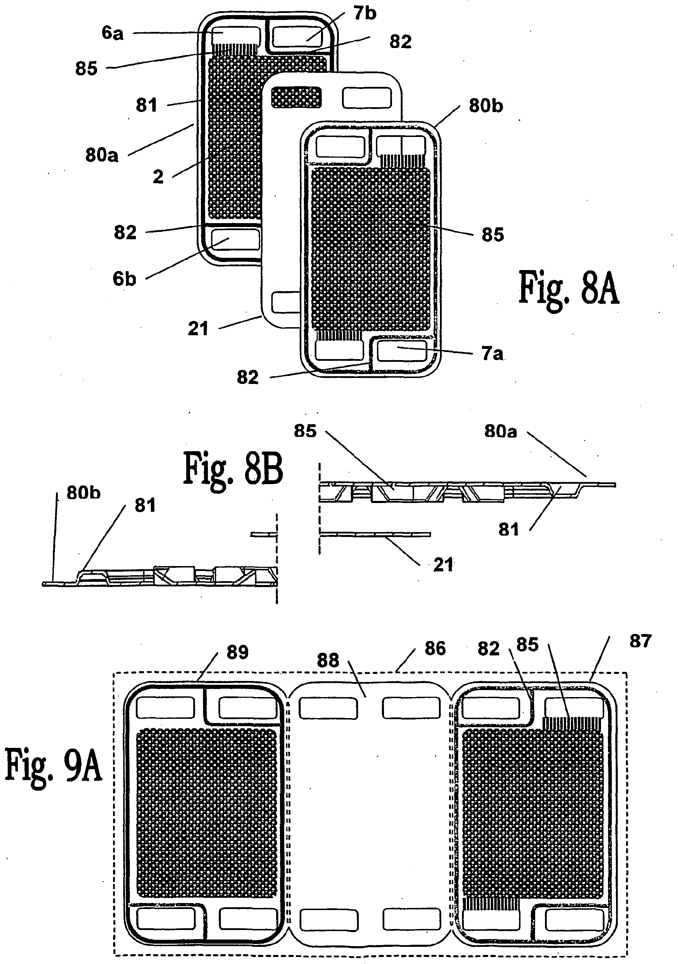

Figure 8 provides an exploded view of a bipolar plate assembly which comprises a pair of current collector flow distributor plates **1** having, according to the invention, spacer elements as an integral part thereof, and a separator sheet **21** interposed therebetween. The structural features of the current collector flow distributor plate (shape, dimensions, characteristics of the central region having the baffles distributed thereon and the respective position of the peripheral openings) are similar to those described in relation to the basic embodiment shown in reference to figures 1 to 5. However, the rough face of the current collector flow distributor plate **80a** having the baffles distributed on its central region further comprises, according to the embodiment illustrated in the cross-section shown in figure 8b, one or more raised regions thereon, serving as integral spacer means. The raised region is preferably formed following the creation of a corresponding depression in the rough face of the current collector flow distributor plate by methods well known in the art. As shown,in figures 8a and 8b, the raised region **81** is provided on the margins of the rough surface of the plate, thus circumferentially surrounding the central region **2** and the two pairs of openings (**6a, 7a, 6b, 7b**), while portions of said raised region, designated **82,** extend on said rough surface such that the central region **2** is continuous with the first pair of peripheral openings (**6a, 7a**) and is separated from the second pair of openings (**6b, 7b**). The height and width of said raised regions are in the ranges between 0.05 and 5 mm and 0.3 to 3, respectively. The boundary areas of the central region **2,** which are adjacent to the pair of inlet and outlet openings (**6a, 7a**) continuous with said central region **2,** are provided with a plurality of flow directing and/or diverting elements **85** thereon (shown in figure 8b), which are preferably in the form of narrow dikes defining channels therebetween. It should be noted that when arranged to form the by-polar plate, the two current collector flow distributor plates are simply placed in parallel with their rough faces opposing one another and the separator interposed therebetween, and the resulting bi-polar unit is sealed.

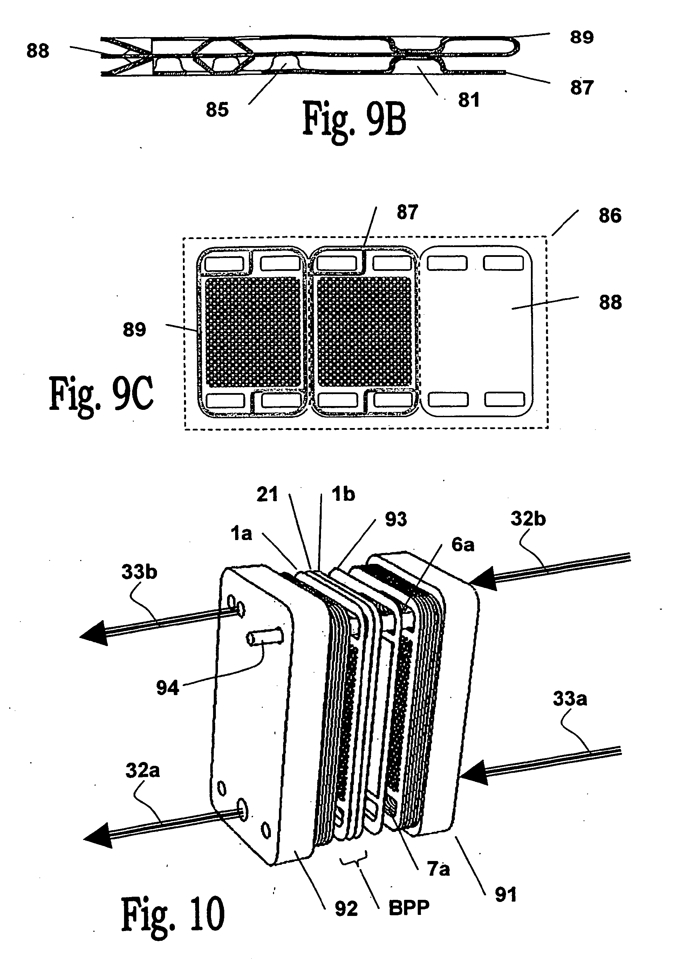

Figures 9a, 9b and 9c further illustrate several preferred modes of using the current collector flow distributor plate discussed hereinabove to form a bi-polar plate. The alternative embodiments shown in Figures 9a, 9b and 9c relate to the use of a single, rectangular metal sheet **86** which is subdivided into three rectangular sectors of the same dimensions, which are designated **87, 88** and **89.** The metal sheet **86** is processed, by techniques mentioned hereinbefore, to define the desired patterns on each of the sections **87-89.** Thus, according to figure 9a, the lateral sections **87** and **89** are processed to afford the current collector flow distributor plates as described in Figure 8a and the intermediate section **88** is processed to provide a separator sheet corresponding to numeral **21** of Figure 8a and 8b. The rectangular metal sheet **86** is further processed in the boundary lines separating between the aforementioned sections, for example, by forming columns of small holes in said boundary lines, such that said sections may be easily folded along said lines, to form the bi-polar plate unit. It may be readily appreciated that the rough surfaces of the current collector flow distributor sections **87** and **89**, which surfaces have the baffles and the dike-like regions provided thereon, need to be provided on opposite faces of the metal sheet **86** illustrated in figure 9a. According to an alternative embodiment shown in Figure 9c, the rectangular metal sheet **86** is processed such that two adjacent sections thereof (designated **87** and **89**) provide the current collector flow field plates while the third section **88** is used as a separator. Metal sheet **86** may be easily folded along the boundary lines of said sections such that section **88** is "sandwiched" between sections **87** and **89.**

Figure 10 is an exploded perspective view of a part of an electrochemical cell stack comprising the novel current collector flow distributor plate of the invention. In the figure, a single cell stack is shown within end plate assemblies **91** and **92,** where tightening bolts typically used to hold the stack are designated by **94.** The cell-stack in the specific embodiment shown in the figure is particularly adapted for the specific application of direct liquid (i.e. methanol) where the oxidant fluid also is driven through a duct made-up by the stacking of openings described hereinabove as **6a** and **7a.** In general, a fuel cell stack comprises end plate assemblies and a plurality of unit cells that are connected in series. For the purpose of simplicity, one unit cell is shown in the figure, situated between end plate assemblies **91** and **92.** The unit cell contains a membrane electrode assembly **93** (MEA) provided by an ionically conductive polymer electrolyte membrane, which is typically made of ion exchange resins (such as perflurinated sulfonic acid polymer) having anode catalytic layer and cathode catalytic layer supported on opposite faces thereof, and a gas diffusion layer applied onto each of said electrode layers. The membrane electrode assembly (MEA) **93** is commercially available. Thus, for a direct methanol fuel cell (DMFC), 3-layer MEA based on Nafion™ 117 (D-GABAA manufactured by E. I. DuPont DeNemours & Co.), provided with Pt on carbon catalytic layer on one face thereof, and with Pt and Ru on carbon on the opposing face, may be suitably used. Other metal catalysts may be applied in the form of finely divided particles on the surface of the carbon particles at the anode and cathode surfaces. The gas diffusion layers are preferably provided in the form of sheets made of carbon or graphite paper, carbon or graphite non woven sheets or cloth. Commercially available examples include GDL 31 BA or GDL 31 BC manufactured by SGL.

In accordance with one embodiment of the present invention, a metallic separator sheet **21** is interposed between a first current collector flow distributor plate **1A** and a second current collector flow distributor plate **1B**, each of said first and second plates having an electronically conductive central region perforated by a plurality of apertures, the geometric form and size of said central region being essentially identical to the form and size of said gas diffusion layer contacting the same. As set forth above, one face of each of said first and second current collector flow distributor plates is provided, on its central region, with electronically conductive elastically displaceable baffles distributed thereon and extending therefrom, wherein said faces of said first and second current collector flow distributor plates having the baffles thereon are affixed to the two opposing surfaces of said metallic separator sheet **21** to form a first space bound between said first current collector flow distributor plate **1A** and said separator, and a second space bound between said second current collector flow distributor plate **1B** and said separator, said first and second spaces being connected to passages provided within said fuel cell stack for delivering the fuel and the oxidant therein, respectively. In figure 10, the bi-polar assembly which comprises the two current collector flow distributor plates and the separator interposed therebetween is indicated BPP.

According to one embodiment of the invention, a fine wire mesh is placed between the current collector flow distributor plate **1A** (and/or **1B**), and the adjacent gas diffusion layer. To this end, a stainless steel wire mesh having a wire diameter of 0,23 mm (0.009 inch) and 18 meshes per linear inch and an open area of about 70% is particularly useful. It should be noted that the open area of the aforementioned wire mesh is sufficiently large, and the diameter of the wire is sufficiently small, such that said mesh may be substantially embedded in the carbon sheet contacting the same, thus improving the mechanical strength and the electrical conductivity of the gas diffusion layer.

In the specific design shown in fig. 10, the large and small openings are used as headers for feeding the cathodic and anodic fluids, respectively. Air is introduced into the cathodic header from the upper side (32b), allowing condensate by-products such as water to drop down in the direction of excess air toward the lower outlet (32a). On the other headers, a solution of methanol in water (having a concentration of 1 to 35 % (v/v)), is being recycled, entering at the bottom (33a), filling the accessible open spaces within the stack, including the gaps provided between the metallic separator and the anodic current collector distributor flow plate, as well as most of the pores of the methanol side diffusion layer, finally exiting the upper header (33b) towards a collecting vessel, preferably in the form of a tube (not shown), following which said solution is treated in order to remove carbon dioxide therefrom, and is subsequently recycled back to the feed tank (not shown). The air leaving the stack is also treated, cooled, condensed, washed, scrubbed or else, in order to recycle as much water and other condensable materials to the methanol feed tank, and in order to remove the oxygen lean air to the atmosphere in conditions which mostly serve the heat and mass balance of the system. It should be pointed out that a very low pressure on both inlet feeds, in the range of zero to a single digit milibars value (depending on fluid flow), is sufficient to force the fluids from the inlet headers, through the plenums provided within the bipolar assembly (between the separator plate and the current collector flow distributor plate), toward the outlet headers. From the said plenum, the fluid flows toward the diffusion layer through the perforated region of the current collector flow distributor plate, directed by the baffles, and therefrom to the catalytic layers and the membrane. Further connecting the endplates inlet and outlet of same headers can be done by one or any standard connectors such as threaded, compressed, welded, glued connector, or without any connector directly to the tubing or directly within the end plate towards its addressed target.

When used in heat exchangers or in coalescers, the flow distributor plate provided by the present invention improves the fluid turbulence without increasing the pressure-drop associated with a high speed flow, which high speed flow may be otherwise required in order to achieve the desired flow pattern in the heat exchanger and/or coalescer. In addition, the resilient flow distributor plate of the present invention applies a desired, controllable force upon adjacent plates, thus contributing to the mechanical properties of the heat exchanger and/or coalescer in which it is placed.

### In the Drawings:

Figure 1 is a top view of the non-rough face of a current collector flow distributor plate.
Figures 2a and 2b illustrate possible patterns for use in the design and preparation of the perforated region of the current collector flow distributor plate of the present invention.
Figures 3a and 3b provide a side-elevated view and a top view, respectively, of two different embodiments of the rough face of a current collector flow distributor plate of the present invention.
Figures 4a and 4b provide a perspective view and a side section view, respectively, of an individual baffle extending from the current collector flow distributor plate according to the invention.
Figure 5a to 5c show possible patterns for the perforated region of the current collector flow distributor plate of the present invention.
Figures 6a to 6c illustrate the construction of a five layered bi-polar plate.
Figures 7a, 7b and 7c provide a top view and a sectional view, respectively, of a separator sheet suitable for use in combination with the current collector flow distributor plates of the present invention.
Figure 8a and 8b illustrate an exploded view and a sectional view, respectively, of a three layered bipolar plate according to the invention.
Figures 9a, 9b and 9c provide a top view and a sectional view, respectively, of a three layer bi-polar assembly according to the invention. Fig 9c illustrates an alternative method of preparing the three layer bi-polar assembly.
Figure 10 is a perspective view of stacked plates arranged to form a fuel cell stack according to the invention, illustrating the reactants/products flow directions associated with said cell.

### Examples

### Comparative Example 1

### Preparation of a bi-polar plate assembly comprising five metal plates/sheets

### a) Preparation of a current collector flow distributor plate

Two stainless steel sheets (SS302-FH, commercially available) having thickness of 0.15 mm were wet etched to form two pairs of peripheral rectangular inlet and outlet flow openings, as shown in figure 1, full-depth incisions in the central region of the plate, according to the pattern illustrated in Figure 2b. The dimensions of the central region were: length - 90mm, width - 63mm, and the number of full-depth incisions made therein was 924. The apertures were formed by applying a bending tool, causing trapezoidal tabs to bend in a designed angle (20-60 deg), calculated to force-press the GDM to 14 kg/cm² and providing the tabs with a 0.45 to 0.85 mm tip distance from the base sheet metal.

### b) Preparation of a separator plate

A stainless steel sheet (SS316) having a thickness of 0.15 mm was used. Peripheral fluid inlet and outlet openings, were cut by laser based on a design as presented in figure 6a. General dimensions of the plate are: 135 mm length and 74 mm width, with external fluid feed openings of 38 x 12 and 20 x 10 mm located 6 mm from the outside edge on the long sides of the plate, and both aligned to 18 mm from the short side of the plate.

### c) Preparation of spacer-sheets

A metal of thickness of 0.50 mm (SS 316) was cut to shape as per the design in figure 6a. Two spacer sheets were made, one intended for the anode side and one for the cathode side of the bipolar plate. The general dimensions of the spacer sheet and the sizes of the fluid headers were equal to those described hereinabove. The central open areas of the first and second spacer sheets are continuous with the first and second pair of fluid feed header, respectively, and are separated from the other pair, as can be easily seen on fig. 6a (24A and 24B, respectively).

### d) Preparation of sealing gaskets

To prevent leaks, gasket frames were introduced between each metal sheet contact. The gasket frames are made of Mylar® and have a thickness of 0.05 mm. The frames are cut by means of a specially designed punch-cutter, which is laid on top of the raw material atop of plastic sheet in a press, allowed to be pressed between two bed-plates of the press machine, until cut to the pre-designed shape. The general dimensions of the gasket sheets and the sizes of the fluid openings correspond to those described hereinabove in respect to the spacer sheets.

### e) Bi-polar plate assembly

All layers from above were assembled layer by layer to create a carefully aligned bi-polar plate according to the following order:
1. Current collector flow distributor sheet A
2. sealing gasket
3. Spacer A
4. Sealing gasket
5. Separator
6. Sealing gasket
7. spacer B
8. sealing gasket
9. Current collector flow distributor sheet B

### Example 2

### Preparation of a bi-polar plate assembly comprising three metal plates/sheets

### a) Preparation of a separator plate ("pool-like" separator as shown in Figure 7)

Each of the two faces of a 1.5 mm thick 316SS plate (see Example 1(b) for general characteristics thereof) was wet etched to form a pool-like recessed central region and two pairs of peripheral fluid inlet and outlet openings. On each face, "mini-dikes" in the boundary region between one pair of openings and the central region, as shown in Figure 7 (numeral 76), were also made by means of wet etching processing. The dimensions of the recessed region are: L - 90 mm; W - 63 mm; D - 0.50 mm on both sides of the plate, while the external feed openings had the same respective locations and dimensions as described in Example 1. 9 to 18 "mini-dikes" were made on each of the two faces of the plate, each "mini-dike" being about 1 to 1.3 mm wide and 4 mm long. The width of the channel formed between each pair of adjacent "mini-dikes" was about 0.7 to 1 mm.

b) Preparation of the current collector flow distributor sheet was done following the same procedure as had been described hereinabove in part (a) of Example 1, while the gaskets were made as per the description in part (d) of same example.

### c) Bi-polar plate assembly

All layers of Example 2 were assembled layer by layer to create one bi-polar plate, according to the following order:
1. Current collector flow distributor sheet A
2. Sealing gasket
3. Pool like separator
4. Sealing gasket
5. Current collector flow distributor sheet B

### Example 3

### Preparation of a bi-polar plate assembly comprising three welded metal plates/sheets

### a) bi-polar plate assembly

A set of three metal layers as described in Example 2 hereinabove, consisting of a pool like separator and two current collectors flow distributor sheets, were welded together in order to create a bipolar plate. Welding eliminates any need for gaskets and/or sealing, and further reduces internal electrical resistance within the cell-plate.

Welding is carried out in the midst of those places where the gasket were intended to be placed. The welding procedure was carried out by a laser YAG machine, after adjusting for sufficient penetration to assure a good seal while not cutting through the plates. Weld was carried out through the current collector flow distributor while this was pressed to place between two plates.

The assembly order of the bi-polar plate was:
1. Current collector flow distributor sheet A
2. Pool like separator
3. Current collector flow distributor sheet B
4. Welding both current collector flow distributor sheets onto the pool-like separator, one sheet per side, assuring the peripheral sealing of the plate as well as the sealing of the connection between the active area and the non relevant external fluid flow opening for each side (i.e isolating the air opening from the anode flow distributor, and the methanol opening from the cathode active area flow distributor.)

### Example 4

### Preparation of a bi-polar plate assembly comprising three metal plates folded from one sheet

### a) Bi-polar plate assembly

A three metal layered bipolar plate, wherein the two current collectors flow distributor plates and the separator are all made of a single metal sheet, is described hereinbelow. Hence, the current collector flow distributor plates and the separator are made in this case of the same stainless steel type, and will have identical thickness.

The non-smooth faces of the current collector flow distributor, that is, the faces having the baffles thereon, were structured on opposing sides, to enable the right folding (see figure 9a). Dikes are added by forming to the current collector flow distributor sections, in order to provide the required recessed area. Those dikes, about 2.5 mm wide and about 0.40 to 0.80 mm high, were formed onto the sheet, facing the same side as the baffles. The separator is flat, and the three pieces have been left connected with a series of slots (0.5 mm wide) punched along the folding line, to ease folding operation. Using this form enables folding of the current collector flow distributor sheets to face the separator with their rough sides facing the separator. The folded three layers were then welded and in a sub-case even wet-sealed (loctaite® 510) or dry sealed (Acheson, Electrodag EB-005)to make a bi-polar plate. In that case the weight of the plate is low as the defined step thickness of the flow distributor had been formed onto a thin sheet metal rather than on a 1.5 mm plate as in example 2. The forming and cutting had been applied by progressive stamping the sheet metal between two parts of a dies, pre formed as a set of tools.

The assembly order of the bi-polar plate was:
1. Folding the two current collector flow distributor sections towards the intermediate layer, namely, the separator.
2. Welding the folded sheets together, as described in Example 3 hereinabove or, alternatively, by brushing / sparying an adhesive / sealant on the two opposing faces of the separator, using a masking template, and affixing the two current collector flow distributor plates thereto.

The dimensions and other structural details are similar to those described hereinabove in example 1.

### Example 5

### Fuel cell stack assembly and operation

### a) Preparation of membrane electrode assembly

Three layered MEA (which is also known as Catalyst Coated Membrane or 'CCM', commercially available from DuPont™ (material code D-GABAA based on Nafion® 117)) was cut to the desired dimensions and configuration by means of a punch-cutter-tool.

Gas diffusion layers made of carbon paper (type 31bc and 31da, 90x63mm by SGL, for anode and cathode sides respectively) were also cut according to the desired shape and size by punch-cutter tool.

A five layered MEA is then prepared by heat pressing two pieces of the precut gas diffusion media (GDM) precut pieces aligned to fit in midst of two seal-frames (described as 'e' herein above) one set on each side of the precut three layered MEA (140°C, under 5,52·10⁶ Pa (800 psi) for 5 minutes) between two beds of a press machine.

Pre cutting of the three layers MEA, the gas diffusion media and the frames was carried out by cutting those with a punch, made to drawing, where the outer design meets with the plate design, and the catalyzed area is centered to overlap the flow-distributor. For the membrane the cutting tool is applied to allow the membrane to extend from the active area, forming together with the frame-seals a membrane-barrier between the anode and cathode sides of each cell in the assembly. In some cases the GDM was allowed to extend from the active area through the connector towards the external fluid flow feed perforation (headers), in order to assist the support of the stacked parts, and hold it in shape with the connector held open to the required fluid while being kept sealed toward the other fluid.

### b) Preparation of fuel cell stack

Multiple cells stack was assembled using the above MEAs, and the different bi-polar plates from the Examples above. An indexing tool was made in order to facilitate the operation, through which the different parts are being stacked one on top of the other in the following order: a first end-plate, (and a gasket provided thereon), MEA, alternately arranging bi-polar plates and an identical number of MEA's, another gasket and finally, a second end-plate. The entire stack is now compressed by tightening stud bolts (4 polyethylene sleeve-coated steel, M6, isolated from the end plate assemblies by means of plastic sleeves and contact isolation discs), until a defined spacing is achieved (i.e. 0.450-0.750 mm per MEA, depending on GDM and gasket frame thickness).

### c) Fuel cell stack operation

The fuel cell stack was operated as follows. An aqueous methanol solution (1M) at 80°C is circulated through the stack anodes using an adjustable flow peristaltic pump, and ambient air was streamed from the top side into the stack via the end plate assemblies, which directs the air into the cathodes. The fluid flow is set to follow the operating current and calculated for about 2-8 times stoichiometric flow on both the anode and cathode sides, about 4-12 cc/min. methanol solution and 0.5-1.5 lpm per cell when operated at 14 Amperes. The stack was maintained at 80°C, using temperature controlled heat pads at both end plate assemblies, in order to compensate for heat losses to the atmosphere. As a variable load, heavy duty variable resistors as well as an electronic load were used, and the current and voltage, as well as other operation conditions were recorded and controlled through a computerized control board.

## Claims

1. A flow distributor plate comprising an electronically conductive region (**2**) perforated by a plurality of apertures (**3**), wherein one face of said perforated region is provided with electronically conductive elastically displaceable baffles (**12**) distributed thereon and extending therefrom, wherein the perforated region of said plate is a central region (**2**) surrounded by a peripheral region (**4**) defined by a sealable surface having at least two pairs of openings (**6a, 7a, 6b, 7b**) incorporated therein, wherein openings of the same pair ((**6a, 7a**)(**6b, 7b**)) are located in opposing sides of said peripheral region, wherein the rough face of said plate having the baffles distributed on its central region further comprises one or more raised regions thereon (**81**), which raised regions are capable of serving as integral spacer means, wherein the raised region is formed following the creation of a corresponding depression in the rough face of the plate, said raised region being provided on the margins of the rough surface of the plate, thus circumferentially surrounding the central region thereof and the two pairs of openings, while portions of said raised region (**82**) extend on said rough surface such that said central region is continuous with the first pair of peripheral openings (**6a, 7a**) and is separated from the second pair of openings (**6b, 7b**), and wherein the boundary areas of the central region, which are adjacent to the pair of openings that is continuous with said central region, are provided with a plurality of flow directing and/or diverting elements thereon (**85**).

2. A flow distributor plate according to claim 1, wherein the baffles are in the form of metallic tabs, each of said metallic tabs being associated with one of the apertures in the perforated region of said flow distributor plate, wherein said tab and said aperture -associated therewith have a common boundary.

3. A flow distributor plate according to claim 2, formed by bending out of the plane of a metal plate a plurality of individual sectors, to obtain a plurality of apertures, wherein the sectors are caused to extend from one face of said plate to provide a plurality of baffles in the form of elastically displaceable metallic tabs distributed on said face.

4. A flow distributor plate according to any one of claims 1 to 3, wherein one or more of the elastically displaceable baffles has a free end which is not connected to said plate, such that a pressure in the range of 2 to 50 kg/cm² applied on the plate results in a deflection in the range of 0.005 to 1 mm, said deflection being measured by the reduction of the distance between said free end and the face of said plate.

5. A flow distributor plate according to any one of claims 1 to 4, wherein the numbers of apertures is greater than the number of baffles.

6. A flow distributor plate according to claim 1, wherein the density of the baffles in the vicinity of a first opening is different from the density of the baffles in the vicinity of a second opening, wherein said first and second openings belong to the same pair of openings.

7. A mono-polar assembly for use in an electrochemical cell, which comprises a flow distributor plate according to any one of claims 1 to 6, and a separator sheet affixed thereto.

8. A bi-polar assembly for use in an electrochemical cell, which comprises a first flow distributor plate and a second flow distributor plate according to any one of claims 1 to 6, wherein said plates are placed in parallel to and spaced apart from each other, with their surfaces having the baffles distributed thereon facing one another, and an electronically conductive separator interposed between said pair of flow distributor plates.

9. A fuel cell stack, which comprises the flow distributor plate of claim 1 or the bi-polar assembly of claim 8.

## Patentansprüche

1. Strömungsverteilerplatte mit einem elektronisch leitfähigen Bereich (2), der durch mehrere Öffnungen (3) perforiert ist, wobei auf einer Oberfläche des perforierten Bereichs elektronisch leitfähige, elastisch versetzbare Leitbleche (12) verteilt angeordnet sind und sich von dieser aus erstrecken, wobei der perforierte Bereich der Platte ein Mittenbereich (2) ist, der von einem Umfangsbereich (4) umschlossen ist, der durch eine abdichtbare Oberfläche mit mindestens zwei Paaren von darin ausgebildeten Öffnungen (6a, 7a, 6b, 7b) definiert ist, wobei Öffnungen des gleichen Paars ((6a, 7a)(6b, 7b)) an gegenüberliegenden Seiten des Umfangsbereichs angeordnet sind, wobei auf der rauen Oberfläche der Platte mit den auf ihrem Mittenbereich verteilten Leitblechen ferner ein oder mehrere erhöhte Bereiche (81) angeordnet sind, die als integrale Abstandseinrichtungen geeignet sind, wobei der erhöhte Bereich nach der Ausbildung einer entsprechenden Vertiefung in der rauen Oberfläche der Platte ausgebildet wird, wobei der erhöhte Bereich auf den Randabschnitten der rauen Oberfläche der Platte angeordnet ist und so den Mittenabschnitt der Platte am Umfang und die beiden Öffnungspaare umschließt, während Abschnitte (82) des erhöhten Bereichs sich auf der rauen Oberfläche derart erstrecken, dass der Mittenabschnitt mit dem ersten Paar Umfangsöffnungen (6a, 7a) zusammenhängend und vom zweiten Öffnungspaar (6b, 7b) getrennt ist, und wobei auf den Grenzflächen des Mittenbereichs, die dem mit dem Mittenbereich zusammenhängenden Öffnungspaar benachbart sind, mehrere Strömungsausrichtungs- und/oder -ablenkelemente (85) angeordnet sind.

2. Strömungsverteilerplatte nach Anspruch 1, wobei die Leitbleche die Form von Metallstreifen haben, wobei jeder der Metallstreifen einer der Öffnungen im perforierten Bereich der Strömungsverteilerplatte zugeordnet ist, und wobei der Streifen und die Öffnung, die einander zugeordnet sind, eine gemeinsame Grenze haben.

3. Strömungsverteilerplatte nach Anspruch 2, die hergestellt wird durch Herausbiegen mehrerer einzelner Abschnitte aus der Ebene einer Metallplatte, um mehrere Öffnungen zu erhalten, wobei veranlasst wird, dass die Abschnitte sich von einer Oberfläche der Platte erstrecken, um mehrere auf der Oberfläche verteilte Leitbleche in der Form elastisch versetzbarer Metallstreifen bereitzustellen.

4. Strömungsverteilerplatte nach einem der Ansprüche 1 bis 3, wobei eines oder mehrere der elastisch versetzbaren Leitbleche ein freies Ende aufweist, das nicht mit der Platte verbunden ist, so dass ein auf die Platte ausgeübter Druck im Bereich von 2 bis 50 kg/cm² zu einer Ablenkung im Bereich von 0,005 bis 1 mm führt, wobei die Ablenkung durch eine Verminderung des Abstands zwischen dem freien Ende und der Oberfläche der Platte definiert ist.

5. Strömungsverteilerplatte nach einem der Ansprüche 1 bis 4, wobei die Anzahl der Öffnungen größer ist als die Anzahl der Leitbleche.

6. Strömungsverteilerplatte nach Anspruch 1, wobei die Dichte der Leitbleche in der Nähe einer ersten Öffnung von der Dichte der Leitbleche in der Nähe einer zweiten Öffnung verschieden ist, wobei die erste und die zweite Öffnung dem gleichen Öffnungspaar zugeordnet sind.

7. Monopolare Anordnung zur Verwendung in einer elektrochemischen Zelle, die eine Strömungsverteilerplatte nach einem der Ansprüche 1 bis 6 und eine daran befestigte Separatorplatte aufweist.

8. Bipolare Anordnung zur Verwendung in einer elektrochemischen Zelle, mit:
einer ersten Strömungsverteilerplatte und einer zweiten Strömungsverteilerplatte nach einem der Ansprüche 1 bis 6, wobei die Platten parallel zueinander und beanstandet voneinander angeordnet sind, und wobei die auf ihren Oberflächen verteilten Leitbleche einander zugewandt sind; und
einem zwischen dem Paar Strömungsverteilerplatten angeordneten elektronisch leitfähigen Separator.

9. Brennstoffzellen-Stapel mit einer Strömungsverteilerplatte nach Anspruch 1 oder mit der bipolaren Anordnung nach Anspruch 8.

## Revendications

1. Plaque distributrice de flux comportant une zone électroniquement conductrice (2) perforée d'une pluralité d'ouvertures (3), où une face de la zone perforée est prévue avec des déflecteurs électroniquement conducteurs (12) élastiquement déplaçables répartis sur celle-ci et s'étendant depuis celle-ci, où la zone perforée de la plaque est une zone centrale (2) entourée d'une zone périphérique (4) définie par une surface refermable présentant au moins deux paires d'ouvertures (6a, 7a, 6b, 7b) incorporées à celle-ci, où les ouvertures de la même paire ((6a, 7a)(6b, 7b)) sont disposées sur des côtés opposés de la zone périphérique, où la face rugueuse de la plaque comportant les déflecteurs répartis dans sa zone centrale comprend en outre une ou plusieurs zones en saillie (81) sur celle-ci, lesdites zones en saillie pouvant servir de moyens d'espacement intégrés, où la zone en saillie est formée consécutivement à la création d'une dépression correspondante sur la face rugueuse de la plaque, la zone en saillie étant prévue dans les marges de la surface rugueuse de la plaque, donc entourant circonférentiellement la zone centrale de celle-ci et les deux paires d'ouvertures, des parties de la zone en saillie (82) s'étendant sur la surface rugueuse de telle manière que la zone centrale est en continuité avec la première paire d'ouvertures périphériques (6a, 7a) et séparée de la deuxième paire d'ouvertures (6b, 7b), et où les aires de bordure de la zone centrale, adjacentes à la paire d'ouvertures en continuité avec la zone centrale, sont prévues avec une pluralité d'éléments de déviation de flux et/ou d'éléments de déviation sur celles-ci (85).

2. Plaque distributrice de flux selon la revendication 1, où les déflecteurs ont la forme d'onglets métalliques, chacun desdits onglets métalliques étant associé à une des ouvertures dans la zone perforée de la plaque distributrice, l'onglet et l'ouverture associées ayant un bord commun.

3. Plaque distributrice de flux selon la revendication 2, formée en pliant hors du plan d'une plaque métallique une pluralité de secteurs individuels afin d'obtenir une pluralité d'ouvertures, lesdits secteurs s'étendant ainsi depuis une face de la plaque pour réaliser une pluralité de déflecteurs sous la forme d'onglets métalliques élastiquement déplaçables répartis sur ladite face.

4. Plaque distributrice de flux selon l'une quelconque des revendications 1 à 3, où un ou plusieurs des déflecteurs élastiquement déplaçables présente une extrémité libre qui n'est pas reliée à la plaque, de telle manière qu'une pression de l'ordre de 2 à 50 kg/cm² appliquée sur la plaque entraîne une déflexion de l'ordre de 0,005 à 1 mm, ladite déflexion étant mesurée par la réduction de distance entre l'extrémité libre et la face de la plaque.

5. Plaque distributrice de flux selon l'une quelconque des revendications 1 à 4, où le nombre d'ouvertures est supérieur au nombre de déflecteurs.

6. Plaque distributrice de flux selon la revendication 1, où la densité des déflecteurs à proximité d'une première ouverture diffère de la densité de déflecteurs à proximité d'une deuxième ouverture, la première et la deuxième ouverture appartenant à la même paire d'ouvertures.

7. Unité monopolaire destinée à être utilisée dans une cellule électrochimique, comprenant une plaque distributrice de flux selon l'une quelconque des revendications 1 à 6, et une tôle distributrice appliquée sur celle-ci.

8. Unité bipolaire destinée à être utilisée dans une cellule électrochimique, comprenant une première plaque distributrice de flux et une deuxième plaque distributrice de flux selon l'une quelconque des revendications 1 à 6, lesdites plaques étant disposées parallèlement et espacées entre elles, leurs surfaces supportant les déflecteurs répartis sur celles-ci étant opposées l'une à l'autre, et un séparateur électroniquement conducteur étant intercalé entre les plaques de la paire de plaques distributrices de flux.

9. Pile à combustible, comprenant la plaque distributrice de flux selon la revendication 1 ou l'unité bipolaire selon la revendication 8.
